# EUROPEAN PATENT SPECIFICATION

(11) **EP 2 630 040 B1**
(45) Date of publication and mention of the grant of the patent: **09.03.2016**
(21) Application number: 11770444.5
(22) Date of filing: 17.10.2011
(51) Int. Cl.: B65G 21/12, B65G 47/64, B64F 1/36

(54) **AUTOMATED SELF-SERVE BAGGAGE DROP-OFF DEVICE**
AUTOMATISIERTE VORRICHTUNG FÜR SELBSTBEDIENUNGSGEPÄCKABGABE
DISPOSITIF DE LIVRAISON DE BAGAGES AUTOMATISÉ À LIBRE-SERVICE

(30) Priority: 19.10.2010 FR 1058536
(43) Date of publication of application: 28.08.2013
(73) Proprietor: Aeroports de Paris, 75014 Paris (FR)
(72) Inventor: MAME, Michael, F-75011 Paris (FR); CAMUS, Christian, F-72650 La Bazoge (FR); GILBERT, Pierre-Henri, F-94160 Saint Mande (FR)
(74) Representative: Gaillarde, Frédéric F. Ch.
(86) International application number: PCT/EP2011/068109
(87) International publication number: WO 2012/052400

(56) References cited:
- EP-A1- 1 655 251
- WO-A1-2008/082300
- WO-A1-2009/126109
- DE-A1-102007 021 745

## Description

### Field of the invention

The present invention relates to the field of the drop-off of baggage with transporters in check-in areas and halls; and more particularly it relates to an automated self-service baggage drop-off device in airports.

### Background

Until quite recently, checking in and monitoring bags for their transfer from the public (self-service) check-in area to the area reserved for their handling required personnel dedicated to that task. However, the constant need to improve productivity and limit operating costs has opened the path for the development of automatic check-in stations making it possible to perform that function while limiting the recourse to that personnel. But this cannot be obtained without respecting certain specific security and safety constraints. In particular, each bag introduced into the station must be identified and recorded, and its owner must be duly declared and identified. It must not be possible to introduce items other than the checked bag in the secured area.

Known from application WO2008/082300 is a device for placing and checking in pieces of baggage formed by a chamber inside which two conveyors are arranged making it possible to receive, identify and transfer said pieces of baggage from the public check-in area to the reserved area without intervention by qualified personnel. These two conveyors are hinged to one another so as to form a receptacle for the baggage sometimes and a transporter for taking that baggage toward a collecting conveyor of the reserved area other times. Although interesting, this device still suffers certain drawbacks. First, the arrangement of the piece of baggage on the first conveyor is not indifferent because to perform the aforementioned identification function, the piece of baggage must necessarily be arranged so that the label is on the top. Then, the baggage being simply placed on said first horizontal conveyor, when the latter is set in motion to convey the piece of baggage onto the second conveyor initially in the vertical position, an instability is created that, in particular for bags with wheels, can cause the baggage to tilt against the front access door of the device, then blocking its operation. Then, the crossing on a rising slope from a deposition altitude with satisfactory ergonomics for the passenger, up to the usual altitudes of the collection conveyor that must receive the piece of baggage, more frequently creates random behaviors of the piece of baggage that lead to failures. Lastly, the successive rotations of the two conveyors, due to the transition from a configuration inclined in a receptacle toward a flat conveyor configuration, as well as the operation of laying the piece of baggage on its side, involve a relatively substantial processing time to get the baggage to the collecting conveyor.

### Brief description of the invention

The present invention proposes to offset these drawbacks with an automatic baggage placement device having a simple and reliable structure with a reduced manufacturing and maintenance cost. One aim of the invention is also to propose a device that allows baggage to be placed in all positions authorized by the dimensions of the receptacle and with free frontal or lateral access to the device depending on the choice of configuration of the placement receptacle.

These aims are achieved by a baggage placement device for receiving and transferring bags toward a downstream collecting conveyor, including a receptacle forming a template for receiving the baggage to be transferred while limiting its dimensions within the predefined limits, said receptacle being made up of a mobile wagon supporting a receiving plate forming a lower portion of said receptacle and on which said baggage will be placed and a conveyor belt arranged substantially perpendicular to said receiving plate and forming a first side portion of said receptacle and against which said baggage thus placed will lean, two flanks integral with a chassis of the device and forming the second and third side portions of said receptacle and a frontal band also fixed on said chassis forming an upper portion of said receptacle, and a closing device being provided to close a front portion of said receptacle forming a fourth side portion and thus to isolate said baggage during the tilting of said mobile wagon, characterised in that said mobile wagon is rotated and elevated by a single motor via a tilting kinematic to lift and tilt the piece of baggage from a substantially vertical lower initial placement position to a horizontal upper position for transfer toward said collecting conveyor.

With this structure having only a single tilting conveyor ensuring both the reception (in the vertical position) and transfer (in the horizontal position) of the baggage, the device only has two degrees of freedom (tilting and horizontal transfer), and the tilting operations can be done with a single actuator, enabling a complete handling cycle of a piece of baggage in less than 15 seconds.

Preferably, said mobile wagon rests on a weighing module so as to make it possible to measure the weight of the baggage once the latter is placed in said receptacle. Said weighing is preferably done continuously during the transfer of the baggage from the lower initial placement position to the upper transfer position. This measurement serves to ensure that the weight of the baggage does not exceed the upper and lower weight limits, have the weight recorded by the air carrier, and check the stability of the baggage.

Depending on the selected placement mode, either said conveyor belt has a conveyance direction perpendicular to a tilting axis of said receiving plate so as to allow frontal tilting of said receptacle, or has a conveyance direction parallel to a tilting axis of said receiving plate so as to allow a lateral tilting of said receptacle.

Depending on the selected placement mode, the placement of the baggage in said receptacle is done by one of said side portions of said receptacle parallel or perpendicular to the conveyance direction.

Depending on the considered configuration, said tilting kinematics include any one of the following mechanisms: a mechanism with slide channels, connecting rods, pivots, shears, cycloid cradles or any other similar mechanism.

Depending on the considered configuration, said driving of the tilting kinematics can rely on a connecting rod-handle or similar system actuated by rotary motor or a jack.

Advantageously, at least one of said flanks includes a detection barrier to ensure compliance with a height limit of the baggage.

### Brief description of the drawings

The features and advantages of the present invention will better emerge from the following description, done for information and non-limitingly, in light of the appended drawings, in which:
- figures 1 and 2 are external and internal perspective views of a first embodiment of an automated device for self-service baggage drop-off according to the invention,
- figures 3A and 3B are two cross-sectional views of the device of figures 1 and 2 in the two extreme movement positions,
- figures 4A, 4B and 4C are diagrammatic views illustrating, in three successive positions, a second embodiment of an automated self-service baggage drop-off device according to the invention, and
- figures 5A, 5B, 5C and 5D show, in top view, different embodiments of automated self-service baggage drop-off devices according to the invention.

### Detailed description of one preferred embodiment

The invention relates to an automated baggage transfer system used, in the context of check-in and verification, in particular in airports, for self-service baggage delivery (i.e. without the presence of an airline agent) by a passenger who has his boarding pass (or electronic ticket).

This system must therefore ensure that each piece of baggage delivered by a passenger is clearly identified and checked in and belongs to him while ensuring that that passenger cannot, during that automated transfer, introduce prohibited objects, inadvertently or deliberately, in the reserved area behind the system accessible only to authorized agents. To that end, it handles the weighing, laying down, lifting, reading of the bar codes and/or radiofrequency (RFID), and injection of the baggage into the collection system of the automated handling system for checked bags, while guaranteeing passenger security, and the sealing of the passage relative to the reserved area. It also guarantees that the baggage complies with the limitations of the authorized template and does not contain unstable loads such as animals, for example. Lastly, the information collected during this transfer (identification, weight, dimensions) must be able to be transmitted locally to the passenger (via a communication interface also providing him with a receipt) and remotely via an external computer application making it possible to precisely inform the receiving transport companies.

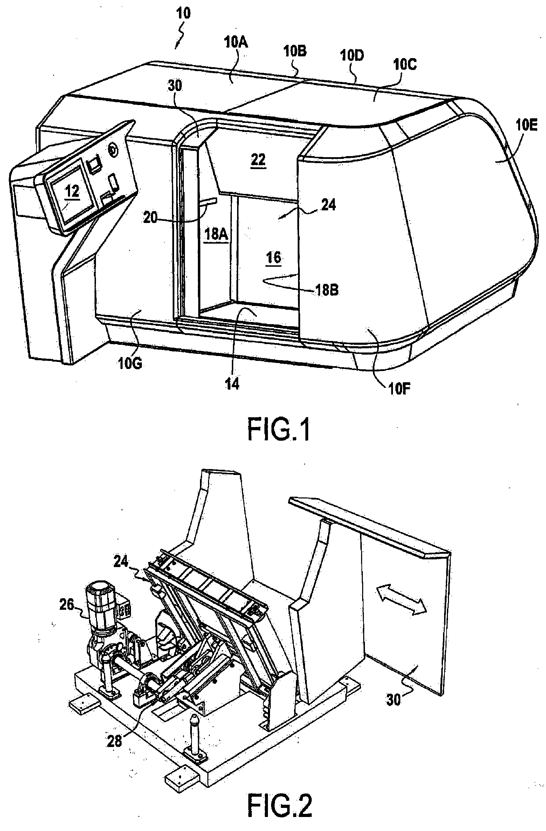

Such a system, one embodiment of which is illustrated in external perspective in figure 1, includes a shell 10 formed by removable panels, for example 10A to 10G, to facilitate the maintenance thereof and with which a man-machine interface 12 is associated for communication with the passenger during the placement of his bag(s), a receptacle forming a template to receive the baggage to be transferred while limiting its dimensions in the predefined limitations. Thus, unlike the existing prior art, it can be guaranteed that a piece of baggage injected downstream into an automated collection system will not have dimensions exceeding that system's handling capacity.

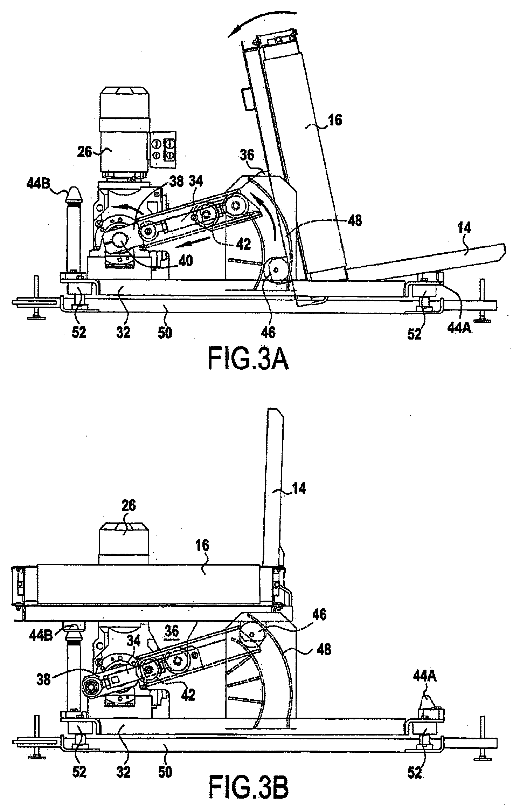

More specifically, this receptacle is formed by a mobile wagon (illustrated in particular in figure 2) supporting a receiving plate 14 that forms the lower portion of the receptacle and on which the baggage will be placed, and a conveyor belt 16 arranged substantially perpendicular (with an angle comprised between 90° and 95°) to said receiving plate and forming the bottom of said receptacle and against which the baggage that has been placed on the receiving plate by the passenger will lean. To define a maximum allowable footprint for the baggage, the receptacle includes, on two other sides, two other flanks (18A, 18B) secured to the frame supporting the shell of the device or preferably secured to a chassis of a weighing module (illustrated in figures 3A and 3B) in turn resting on said frame and, to define the maximum allowable height for said baggage, a detection barrier 20 fixed on the flanks 18A and 18B. A frontal band 22 fixed on the frame supporting the shell or on the chassis of the weighing module forms the top portion of the receptacle.

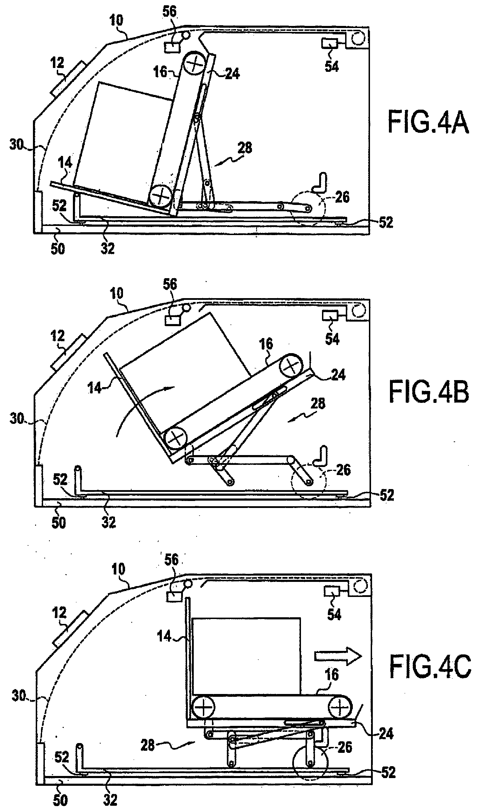

As illustrated by the partial perspective view of the inside of the system of figure 2 and the cross-sectional views of figures 3A and 3B, the mobile wagon 24 is driven by a single rotating motor 26 connected with a tilting kinematic 28 that makes it possible to lift and tilt the baggage from a lower substantially inclined initial deposition position to an upper horizontal downstream transfer position toward a so-called downstream or receiving or collecting conveyor (not shown), then toward a baggage handling system. A closing device 30 of the sliding door or collapsible type is provide to close the front portion of the receptacle once the baggage is deposited on the receiving plate and thus to isolate the passenger from said baggage during tilting of the mobile wagon and the transfer of the baggage toward the collecting conveyor. The mobile wagon and its tilting kinematics advantageously rest on the weighing module 32 making it possible to measure the weight of the baggage, and a bar code reading module and RFID label reading module are provided (both illustrated diagrammatically in figures 4A to 4C) to ensure the identification of the baggage, said second identification preferably being done in the receptacle before tilting of the mobile wagon, unlike the first.

In the illustrated example, the tilting kinematics are driven by a connecting rod-handle system (whereof the wagon constitutes the oscillator) actuated by the single rotary motor. The driving rod 34 that ensures the movement of the mobile wagon 24 is articulated at a first end in a yoke 36 integral with said wagon, substantially at its central portion, and at a second end opposite the first to the handle 38 that is rotated by a drive shaft 40 of the motor 26. At least one pair of rollers 42 guarantees rectilinear guiding of the connecting rod during movement of the wagon between its two end positions materialized by two conical stops 44A, 44B. To allow this tilting, the mobile wagon 24 includes, on either side of its lower portion, a wheel freely mounted 46 that can move in an arc of circle-shaped rail 48. The assembly mounted on the weighing module 32 is supported by a support frame 50 through which strain gauges 52 making it possible to measure the weight of the deposited pieces of baggage during their transfer.

The operation of the tilting kinematics from its initial lower position (figure 3A) to its final upper position (3B) is as follows. In its initial position, the mobile wagon is substantially vertical and abutting on its conical stop 44A. The wheels 46 are in the lower portion of their rail 48 and the connecting rod 34 in an upper stable position in the extension of the handle 38. Starting the motor 26 will then rotate the drive shaft 40, which, by turning the handle 38 by 180°, will drive a withdrawal of the connecting rod 34 in a lower position in the axis of the handle. This withdrawal will drive the wheels 46, which, by moving in the rails 48, will make the mobile wagon 24 tilt toward its second conical stop 46B. The baggage is then in position to be transferred from the belt 16 on a collecting conveyor downstream toward the reserved area, said transfer being done parallel to the tilting axis of the wagon.

Figures 4A, 4B and 4C, which show the successive positions of the mobile wagon during the tilting thereof, diagrammatically illustrate another configuration of the system according to the invention in which the conveyance direction of the belt is no longer positioned parallel to said tilting axis (or axis of rotation), but perpendicularly so that once the rotation of the mobile wagon is completed, the transfer of the piece of baggage is done perpendicularly to said axis (as indicated by the direction arrow) and not parallel, as before.

During this tilting movement, the mobile wagon in fact goes through different positions, including the three that are illustrated. Figure 4A corresponds to a first static deposition position in which the mobile wagon 24 is in its initial position with the receiving plate 14 inclined by around 10° relative to the horizontal to ensure the stability of the piece of baggage. In that position, the plate in forward stop and the mobile wagon in a substantially vertical position and in contact, potentially through an inclined bank secured to the mobile wagon, with the front band 22 forms, with the lateral flanks (not shown), a natural airlock that prohibits any communication with the reserved area. Figure 4B illustrates a second position in which the mobile wagon has started its rotation to bring it to the altitude, i.e. to the exact plane, of the receiving belt of the downstream conveyor (not shown), the baggage then being placed onto the conveyor belt 16. Lastly, figure 4C illustrates the final position of the mobile wagon in which it has rejoined, in rear stop, the altitude of the receiving carrier belt of the downstream conveyor and in which the piece of baggage can therefore be transferred in the direction indicated by the arrow toward said downstream conveyor. Once this transfer is done, the mobile wagon returns to the static placement position and the closing device (a rolling shutter in the case at hand) is then opened to allow the passenger to access the receptacle and, if necessary, to deposit another piece of baggage. If needed, this return can also prematurely restore a piece of baggage to the passenger if he appears non-compliant at the end of his identification process.

Thus, the rotating tilting of the mobile wagon to bring it to the altitude of the downstream conveyor makes negligible, during transfers of the baggage, any slope of the belts between the conveyors themselves and between them and an existing collection facility, unlike the automated deposition systems of the prior art. However, these slopes frequently disrupt the behavior of certain types of baggage and are a source of failures of the system.

Of course, these tilting kinematics implementing a connecting rod-handle system actuated by a rotary motor are in no way limiting and it is clear that any other kinematics and any other driving system allowing the mobile wagon to go from its initial low placement position to its upper final transfer position can be used, on the condition that it is preferably actuated by a single motor, linear or rotary. Thus, the use of a linear motor (of the jack type, for example) to make the mobile wagon tilt around a fixed axis of rotation arranged at a height compatible with the altitude of the collecting conveyor could also be suitable.

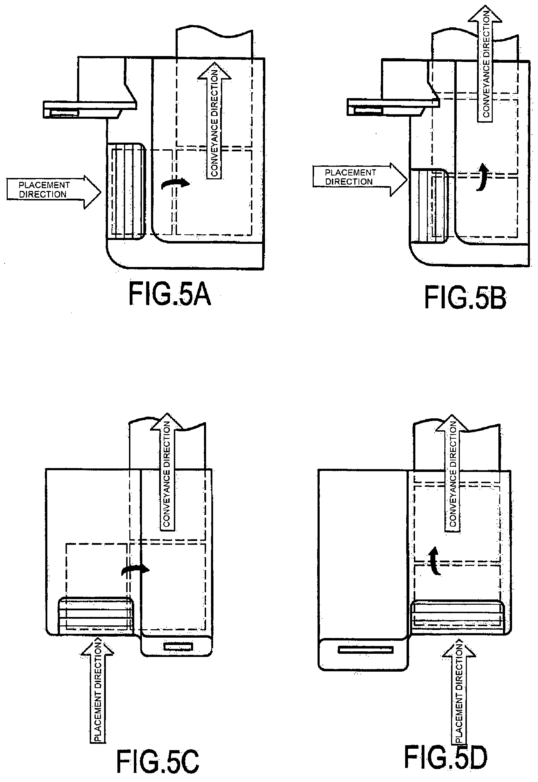

Thus, depending on whether the loading direction of the baggage and its transfer toward the collecting conveyor is oriented downstream, four different configurations can be considered for the system according to the invention: lateral placement with lateral transfer (figure 5A), lateral placement with frontal transfer (figure 5B), frontal placement with lateral transfer (figure 5C), frontal placement with frontal transfer (figure 5D).

All of the configurations are models carrying out the primary functions with minimal mechanical movements and automation.

The so-called lateral placement configurations illustrated in top view in figures 5A and 5B are models offering a priori the best maintenance accessibility, protecting the passenger's activity from circulation paths during the placement, and a priori make it possible to better take into account constraints for Handicapped or Reduced Mobility Persons (HRMP).

The so-called frontal placement configurations illustrated in top view in figures 5C and 5D are models offering a priori the best density of implantable devices on a check-in surface shelf. These configurations also lend themselves to a moving check-in surface.

The so-called lateral transfer configurations illustrated in top view in figures 5A and 5C are models accepting the narrowest conveyors, which facilitates the integration thereof. The transfer toward the downstream conveyor is done in the direction of the length of the piece of baggage.

The so-called frontal transfer configurations illustrated in top view in figures 5B and 5D are models offering a priori a good compactness and better insertion possibilities. The transfer toward the downstream conveyor is done in the direction of the width of the piece of baggage.

The tilting system forming the receptacle according to the invention thus has a number of advantages, in particular:
- it is adaptable to the variable altitudes of the existing collection systems and in particular to several heights of the collector conveyor in a range of 400 to 750 mm by a set of mechanical kits without any impact on the placement height that can be less than or equal to 300 mm and on the transfer conditions toward that conveyor,
- aside from baggage hazards, the mechanical transfer cycle from validation by the passenger to reopening of the closing device does not exceed 15 seconds,
- it only starts operating if the identity of the passenger owning the baggage has been verified (confirmation through computer exchange) because in case of non-reconciliation (this not being limited to a particular number of pieces of baggage), the baggage transfer is refused and the closing device remains open,
- the inclined receiving plate ensures stability of the piece of baggage while limiting the placement depth,
- it ensures by itself, via the receiving plate and the conveyor belt in interface with the surrounding elements of the chassis, the security conditions relative to the passenger or the secured separation between the public area and the reserved area in the placement and transfer positions,
- it guarantees by itself, in interface with the surrounding elements of the chassis, the limitation of the template for allowable pieces of baggage to the maximum dimensions allowed both in the placement position and the transfer position,
- through the continuous contact of the piece of baggage with the conveyor belt and the purely mechanical and determined management of the movements (no recourse to balancing of the piece of baggage), the kinematics of the tilting are completely reversible and make it possible to return the baggage to the passenger in his original position, and
- due to the initial incline of the receiving plate, the piece of baggage is returned to a stable position,
- the selected tilting kinematics, relying on a combination of translational and rotational movement, makes it possible to obtain a trajectory of the tilting system and the piece of baggage guaranteeing a minimum height bulk of the invention.

## Claims

1. A baggage placement device for receiving and transferring bags toward a downstream collecting conveyor, including a receptacle forming a template for receiving the baggage to be transferred while limiting its dimensions within the predefined limits, said receptacle being made up of a mobile wagon (24) supporting a receiving plate (14) forming a lower portion of said receptacle and on which said baggage will be placed and a conveyor belt (16) arranged substantially perpendicular to said receiving plate and forming a first side portion of said receptacle and against which said baggage thus placed will lean, two flanks (18A, 18B) integral with a chassis of the device and forming the second and third side portions of said receptacle and a frontal band (22) also fixed on said chassis forming an upper portion of said receptacle, and a closing device (30) being provided to close a front portion of said receptacle forming a fourth side portion and thus to isolate said baggage during the tilting of said mobile wagon, **characterised in that** said mobile wagon is rotated and elevated by a single motor (26) via a tilting kinematic (28) to lift and tilt the piece of baggage from a substantially vertical lower initial placement position to a horizontal upper position for transfer toward said collecting conveyor.

2. The placement device according to claim 1, **characterized in that** said conveyor belt includes a conveyance direction parallel to a tilting axis of said receiving plate so as to allow lateral tilting of said receptacle.

3. The placement device according to claim 1, **characterized in that** said conveyor belt includes a conveyance direction perpendicular to a tilting axis of said receiving plate so as to allow frontal tilting of said receptacle.

4. The placement device according to claims 2 or 3, **characterized in that** the placement of the baggage in said receptacle is done by one of said side portions of said receptacle parallel to the conveyance direction.

5. The placement device according to claims 2 or 3, **characterized in that** the placement of the baggage in said receptacle is done by one of said side portions of said receptacle perpendicular to the conveyance direction.

6. The placement device according to claim 1, **characterized in that** said mobile wagon rests on a weighing module (32, 52) so as to make it possible to measure the weight of the baggage once the latter is placed in said receptacle.

7. The placement device according to claim 6, **characterized in that** said weighing is done continuously during the transfer of the baggage from the lower initial placement position to the upper transfer position.

8. The placement device according to any one of claims 1 to 7, **characterized in that** said tilting kinematics include any one of the following mechanisms: a mechanism with slide channels, connecting rods, pivots, shears, cycloid cradles or any other similar mechanism.

9. The placement device according to claim 8, **characterized in that** said tilting kinematics are driven by a connecting rod-handle or similar system actuated by rotary motor or a jack.

10. The placement device according to any one of claims 1 to 9, **characterized in that** at least one of said flanks includes a detection barrier (20) to ensure compliance with a height limit of the baggage.

## Patentansprüche

1. Gepäckplatzierungsgerät zum Aufnehmen und Übermitteln von Koffern auf ein nachfolgendes Sammelband, einen Behälter umfassend, der eine Maske zum Aufnehmen des zu übermittelnden Gepäckstücks bildet, während sie dessen Abmessungen innerhalb der vorbestimmten Grenzen eingrenzt, wobei sich der besagte Behälter aus einem beweglichen Wagen (24) zusammensetzt, in dem sich eine Aufnahmeplatte (14) befindet, die einen unteren Abschnitt des besagten Behälters bildet und auf der das besagte Gepäckstück abgestellt wird und aus einem Förderband (16), das im Wesentlichen senkrecht zur besagten Aufnahmeplatte angeordnet ist, und den Abschnitt der ersten Seite des besagten Behälters bildet und an das sich das somit abgestellte Gepäckstück anlehnt, zwei Flanken (18A, 18B), die in einem Rahmen des Gerätes integriert sind, und die Abschnitte der zweiten und dritten Seite des besagten Behälters bilden und eine Stirnleiste (22), die ebenso am besagten Rahmen befestigt ist und einen oberen Abschnitt des besagten Behälters bildet, und eine Schließvorrichtung (30), die vorhanden ist, um einen Frontabschnitt des besagten Behälters zu schließen, der den Abschnitt einer vierten Seite bildet, um das besagte Gepäckstück somit während des Kippens des besagten beweglichen Wagens zu isolieren, **dadurch gekennzeichnet, dass** der besagte bewegliche Wagen (24) durch einen einzigen Motor (26) über eine Kippkinematik gedreht und gehoben wird, um das Gepäckstück anzuheben und es zur Übermittlung zum besagten Sammelband von einer im Wesentlichen vertikalen unteren Ausgangsposition in eine horizontale obere Position zu kippen.

2. Platzierungsgerät nach Anspruch 1, **dadurch gekennzeichnet, dass** das besagte Förderband eine Förderrichtung umfasst, die parallel zu einer Kippachse der besagten Aufnahmeplatte verläuft, um ein seitliches Kippen des besagten Behälters zu ermöglichen.

3. Platzierungsgerät nach Anspruch 1, **dadurch gekennzeichnet, dass** das besagte Förderband eine Förderrichtung umfasst, die senkrecht zu einer Kippachse der besagten Aufnahmeplatte verläuft, um ein frontales Kippen des besagten Behälters zu ermöglichen.

4. Platzierungsgerät nach den Ansprüchen 2 oder 3, **dadurch gekennzeichnet, dass** die Platzierung des Gepäckstücks im besagten Behälter durch einen der besagten Seitenabschnitte des besagten Behälters parallel zur Förderrichtung erfolgt.

5. Platzierungsgerät nach den Ansprüchen 2 oder 3, **dadurch gekennzeichnet, dass** die Platzierung des Gepäckstücks im besagten Behälter durch einen der besagten Seitenabschnitte des besagten Behälters senkrecht zur Förderrichtung erfolgt.

6. Platzierungsgerät nach Anspruch 1, **dadurch gekennzeichnet, dass** der besagte bewegliche Wagen auf einem Wiegemodul (32, 52) aufliegt, um es möglich zu machen, das Gewicht des Gepäckstücks zu messen, sobald letzteres im besagten Behälter platziert worden ist.

7. Platzierungsgerät nach Anspruch 6, **dadurch gekennzeichnet, dass** das besagte Wiegen fortlaufend während des Transfers des Gepäckstücks von der unteren ursprünglichen Platzierungsposition zur oberen Transferposition erfolgt.

8. Platzierungsgerät nach irgendeinem der Ansprüche 1 bis 7, **dadurch gekennzeichnet, dass** die besagte Kippkinematik irgendeinen der folgenden Mechanismen umfasst: einen Mechanismus mit Gleitschienen, Zugstangen, Drehzapfen, Scheren, zykloide Hängebühnen oder irgendeinen ähnlichen Mechanismus.

9. Platzierungsgerät nach Anspruch 8, **dadurch gekennzeichnet, dass** die besagte Kippkinematik von einer Kurbelstange oder einem ähnlichen System angetrieben wird, das durch einen Drehmotor oder einen Zylinder angetrieben wird.

10. Platzierungsgerät nach irgendeinem der Ansprüche 1 bis 9, **dadurch gekennzeichnet, dass** zumindest eine der besagten Flanken eine Lichtschranke (20) umfasst, um die Einhaltung des Höhenlimits des Gepäckstücks zu gewährleisten.

## Revendications

1. Dispositif de mise en place de bagages pour recevoir et transférer des sacs vers un transporteur de collecte en aval, comportant un réceptacle formant un gabarit pour recevoir les bagages à transférer tout en limitant ses dimensions aux limites prédéfinies, ledit réceptacle étant constitué d'un chariot mobile (24) supportant une plaque de réception (14) formant une partie inférieure dudit réceptacle et sur laquelle lesdits bagages seront placés et une bande transporteuse (16) agencée de manière sensiblement perpendiculaire à ladite plaque de réception et formant une première partie latérale dudit réceptacle et contre laquelle lesdits bagages ainsi placés s'appuieront, deux flancs (18A, 18B) d'un seul tenant avec un châssis du dispositif et formant les deuxième et troisième parties latérales dudit réceptacle et une bande frontale (22) également fixée sur ledit châssis formant une partie supérieure dudit réceptacle, et un dispositif de fermeture (30) étant prévu pour fermer une partie avant dudit réceptacle formant une quatrième partie latérale et pour isoler ainsi lesdits bagages lors de l'inclinaison dudit chariot mobile, **caractérisé en ce que** ledit chariot mobile est tourné et soulevé par l'action d'un simple moteur (26) par l'intermédiaire d'une cinématique d'inclinaison (28) pour soulever et incliner l'article de bagages d'une position initiale de mise en place inférieure sensiblement verticale jusqu'à une position supérieure horizontale pour un transfert vers ledit convoyeur de collecte.

2. Dispositif de mise en place selon la revendication 1, **caractérisé en ce que** ladite bande transporteuse comporte une direction de transport parallèle à un axe d'inclinaison de ladite plaque de réception de manière à permettre une inclinaison latérale dudit réceptacle.

3. Dispositif de mise en place selon la revendication 1, **caractérisé en ce que** ladite bande transporteuse comporte une direction de transport perpendiculaire à un axe d'inclinaison de ladite plaque de réception de manière à permettre une inclinaison frontale dudit réceptacle.

4. Dispositif de mise en place selon les revendications 2 ou 3, **caractérisé en ce que** la mise en place des bagages dans ledit réceptacle est réalisée par l'une desdites parties latérales dudit réceptacle parallèle à la direction de transport.

5. Dispositif de mise en place selon les revendications 2 ou 3, **caractérisé en ce que** la mise en place des bagages dans ledit réceptacle est réalisée par l'une desdites parties latérales dudit réceptacle perpendiculaire à la direction de transport.

6. Dispositif de mise en place selon la revendication 1, **caractérisé en ce que** ledit chariot mobile repose sur un module de pesage (32, 52) de manière à permettre de mesurer le poids des bagages une fois que ces derniers sont placés dans ledit réceptacle

7. Dispositif de mise en place selon la revendication 6, **caractérisé en ce que** ledit pesage est effectué en continu au cours du transfert des bagages de la position de mise en place initiale inférieure jusqu'à la position de transfert supérieure.

8. Dispositif de mise en place selon l'une quelconque des revendications 1 à 7, **caractérisé en ce que** les cinématiques d'inclinaison comportent l'un quelconque des mécanismes suivants : un mécanisme à glissières, bielles, pivots, cisailles, berceaux cycloïdes ou tout autre mécanisme similaire.

9. Dispositif de mise en place selon la revendication 8, **caractérisé en ce que** lesdites cinématiques d'inclinaison sont entraînées par une manche de bielle ou un système similaire actionné par un moteur rotatif ou un vérin.

10. Dispositif de mise en place selon l'une quelconque des revendications 1 à 9, **caractérisé en ce qu'**au moins l'un desdits flancs comporte une barrière de détection (20) pour garantir le respect de la limite de hauteur des bagages.
